(19) Europäisches Patentamt
European Patent Office
Office européen des brevets

(11) Veröffentlichungsnummer: **0 121 808**
B1

(12) **EUROPÄISCHE PATENTSCHRIFT**

(45) Veröffentlichungstag der Patentschrift:
07.06.89

(51) Int. Cl.⁴: **E 02 D 19/12**, C 09 K 17/00

(21) Anmeldenummer: 84102726.1

(22) Anmeldetag: 13.03.84

(54) Isolierung von Schadstoffen in Bodenschichten.

(30) Priorität: 12.04.83 DE 3313034

(43) Veröffentlichungstag der Anmeldung:
17.10.84 Patentblatt 84/42

(45) Bekanntmachung des Hinweises auf die Patenterteilung: 07.06.89 Patentblatt 89/23

(84) Benannte Vertragsstaaten:
BE DE FR GB NL

(56) Entgegenhaltungen:
EP–A– 0 082 971
DE–B– 1 171 792
DE–C– 609 976
DE–C– 858 967
US–A– 4 288 174

(73) Patentinhaber: HÜLS AKTIENGESELLSCHAFT
Paul-Baumann-Strasse 1
D-4370 Marl 1 (DE)

(72) Erfinder: Burkhardt, Rudolf, Dr.
Im Hahn 1
D-5461 Vettelschoss (DE)
Erfinder: Hass, Hansjürgen, Dr.
Telegrafstrasse 27
D-5210 Troisdorf (DE)

## Beschreibung

Gegenstand der vorliegenden Erfindung ist ein Verfahren zur Isolierung von Schadstoffen in wasserdurchlässigen Böden durch Einbringen abdichtenden Materials um den gefährdeten Bereich.

Es ist bekannt, daß ein Eindringen von Schadstoffen in Böden, besonders wenn diese sandig und flüssigkeitsdurchlässig sind, das Grundwasser verunreinigen und damit zu einer Gefährdung der Trinkwasserversorgung führen kann. Das Eindringen von solchen grundwassergefährdenden Flüssigkeiten läßt sich oft aufgrund von Unfällen, häufig jedoch durch ältere, unsachgemäße Ablagerungen nicht vermeiden, so daß Maßnahmen ergriffen werden müssen, die Eindringstelle zu begrenzen.

Besonders groß ist die Gefahr der Grundwasserverunreinigung durch spezifische schwere, nicht wäßrige Flüssigkeiten, z. B. Chlorkohlenwasserstoffe, die bis auf die Sohle des Grundwassers absinken, sowie durch wasserlösliche Substanzen, z. B. Phenolen und wäßrige Schadstofflösungen, die sich beim Eindringen in das Grundwasser sofort lösen und zu hohen Schadstoffkonzentrationen führen.

Die technischen und wirtschaftlichen Mängel der bisher üblichen Sanierungsmaßnahmen — z. B. Abtragen von Bodenschichten, Absenken des Grundwassers durch Einbringen von Barrieren in den Boden und Abpumpen der Schadstofflösungen — und ihre Risiken haben zur Entwicklung verschiedener Methoden geführt, die überwiegend auf einer Immobilisierung der Schadstoffe beruhen. Dadurch soll die Ausbreitung der Schadstoffe im Untergrund und im Grundwasser verhindert werden. Zu diesen methoden gehören z. B.

1. die Umwandlung löslicher Schadstoffe in unlösliche Substanzen, wobei eine reaktionsfähige Substanz in den Schadstoffbereich injiziert wird. Die Anwendung dieser Methode, die zur Immobilisierung radioaktiver und hochtoxischer Stoffe entwickelt wurde, auf weniger gefährliche Schadstoffe bleibt wegen der Belastung des Grundwassers mit einer zusätzlichen reaktiven Chemikalie umstritten,

2. die Injektion von Verfestigung- und Abdichtungsmitteln in den Schadstoffbereich, um die Schadstoffe an Ort und Stelle zu immobilisieren (Mikroeinkapselung),

3. die Umschließung des Schadstoffbereichs mit einer bentonit- oder tonhaltigen vertikalen Abdichtung (Dichtwand), die unten in die Sohle des Grundwasserleiters, gewöhnlich eine dichte Tonschicht einbindet (Makroeinkapselung), (vgl. Spooner, Wetzel, Grube, Proc. 3. Nat. Conf. Management of uncontrolled waste sites, Washington, 1982, Seite 195).

Die beiden letztgenannten Verfahren verwenden zur Immobilisierung der Schadstoffe Injektionsmittel bzw. Dichtwandmassen, die zwar gegen Wasser ausreichend abdichten, aber gegenüber wäßrigen Schadstofflösungen oder verschiedenen Flüssigkeiten, u. a. Chlorwasserstoffen, und deren wäßrige Lösungen keine ausreichende abdichtende Wirkung une eine ungenügende Beständigkeit zeigen (vgl. Loc. Cit., Seite 167).

Aus der DE-C 609 976 war auch bekannt, durch Einrammen von Rohren und Einstampfen von Boden eine Baugrube bis zur Wasserundurchlässigkeit durch waagerechte und senkrechte Sperrschichten aus mechanisch verfestigtem Boden abzuschließen. Aus der DE-C 858 967 war bekannt, Baugruben für Gebäude, Dämme o. dgl. durch Einpressen von thixotropen Flüssigkeiten wie Ton oder Bentonit, ggf. mit Zusatz von Wasserglas durch eine wasserdichte Schürze zu sichern. Diese Materialien ergeben keine vollständige Abdichtung. Hoher Aufwand durch Einrammen und Entfernen von Rohren bzw. Spundwänden und Verfüllen mit großen Mengen von Material ist erforderlich. Die Aufgabe der Abdichtung gegen Schadstoffe ist dort nicht angesprochen und nicht gelöst.

Gegenstand der Erfindung ist ein Verfahren zur Isolierung grundwassergefährdender Schadstoffe in wasserdurchlässigen Böden durch Einbringen abdichtenden Materials um den gefährdenden Bereich, wobei die den Schadstoffbereich umgebenden, bis in Grundwasser führende Bodenschichten hinabreichenden eingebrachten vertikalen, die Zufuhr von ausströmenden Grundwasser weitgehend unterbindenden, Abdichtungen in Grundwasserbereich durch eine horizontale, nach unten abschließende Injektionssohle verbunden werden, dadurch gekennzeichnet, daß als gegen Wasser und flüssige Schadstoffe abdichtende Injektionssohle durch Injektion eines gebildeten Gemischs auf Alkalimetallsilikatbasis hergestellt wird, das mindestens ein Alkyltrialkoxysilan der allgemeinen Formel R—Si(OR')$_3$, in der R einen Alkylrest mit 1 bis 6 C-Atomen und R' gleiche oder verschiedene Alkylreste mit 1 bis 4 C-Atomen bedeuten, die ggf. durch ein Sauerstoffatom unterbrochen sein können, und/oder Hydrolyseprodukte dieser Silane enthält.

Unter ein Injektionssohle wird erfindungsgemäß eine mit bekannten Methoden eingebrachte Schicht verstanden, die im wesentlichen aus Alkalisilikaten besteht, die Alkylalkoxysilane untergemischt enthält. Unter Alkalisilikaten sollen dabei die als Wassergläser bekannten Kalium- und besonders Natriumsilikate verstanden werden. Aufgrund ihrer Herstellungsweise fallen sie als wäßrige Lösungen mit unterschiedlichen Gehalten an Alkalioxid unf SiO$_2$ an. Sie werden deshalb als solche wäßrige Lösungen eingesetzt, wobei bevorzugt konzentrierte Lösungen mit einer Dichte $d_4^{20}$ von etwa 1,25 bis 1,40 g. cm$^3$ (entsprechend 30 bis 43° Bé) verwendet werden. Es ist jedoch auch möglich, je nach gewünschter Gelierungszeit, verdünntere Lösungen einzusetzen.

Die Alkalisilikatlösungen enthalten als Geliermittel Trialkoxysilane der Formel R Si (OR')$_3$, wobei R

2

für einen aliphatischen Rest mit 1 bis 6 C-Atomen und R' für gleiche oder ungleiche Alkylreste mit 1 bis 4 C-Atomen steht, die ggf. durch ein Sauerstoffatom unterbrochen sein können. Bevorzugte Trialkoxysilane sind n-Propyl-, Isopropyl- und Isobutyl-Alkoxysilane. Die Alkoxygruppen können auch teilweise in hydrolisierter Form als OH-Gruppen vorliegen.

Die Menge des Silans in dem die Injektionssohle bildenden Gemisch ist vom Molgewicht des Silans, vom $SiO_2$-Gehalt der Wasserglaslösung und von der gewünschten Gelzeit des Gemischs anhängig. Sie beträgt für Gemische mit 10 bis 90 Vol.-%iger Wasserglaslösung von 30 bis 40° Bé ($d_4^{20}$ = 1,25 bis 1,4) und Gelzeiten von 30 bis 300 Minuten 20 bis 140 g pro Liter Gemisch entsprechend einem Molverhältnis Silan : $SiO_2$ von (0,05 bis 0,28) : 1.

Das Einbringen des gelierfähigen Gemischs aus Wasserglas und Alkylalkoxysilanen in den Erdboden erfolgt in an sich bekannter Weise mit Hilfe von bekannten Geräten für Bodeninjektionen und den bewährten Techniken im Dichtwandbau. Diese Maßnahmen lassen sich von der Bodenoberfläche her durchführen. Die Injektionen müssen dabei so durchgeführt werden, daß eine horizontale, oder etwa horizontale, Schicht des Injektionsmaterials unterhalb der Schadensstelle gebildet wird, die schlüssig mit den bereits vorher eingebrachten vertikalen Dichtwänden abschließt. Diese vertikalen Dichtwände können aus an sich bekannten Dichtungsmaterial bestehen, das gegenüber Grundwasser eine ausreichende abdichtende Wirkung zeigt, jedoch gegenüber verschiedenen organischen Flüssigkeiten oder wäßrigen Schadstofflösungen keine ausreichende abdichtende Wirkung oder eine ungenügende Beständigkeit aufweist.

Bei Anwendung der erfindungsgemäßen Verfahrensweise kann nun kein Grundwasser aus horizontaler Richtung in den, den Schadstoffbereich enthaltenden Bereich in nennenswerter Weise eindringen und der Schadstoff, oder eine, den Schadstoff enthaltende Lösung, kann nicht nach unten in das Grundwasser austreten.

Es ist deshalb erfindungsgemäß auch möglich, die Vertikalwände nicht bis in die Sohle des Grundwasserleiters hinab anzulegen, sondern nur so tief, wie die Schadensstelle selbst ist, und dann in dieser Tiefe die horizontale Verbindung mit der erfindungsgemäßen Injektionssohle durchzuführen.

Weiterhin ist es erfindungsgemäß auch möglich, die Vertikalwände an ihrer Innenseite, und ggf. auch von der Außenseite aus, mit dem Gemisch, aus Wasserglas und Alkylalkoxysilanen su beschleiern, um auch die Vertikalwände gegen das Ausströmen von schadstoffhaltigen Lösungen oder Flüssigkeiten abzudichten. In diesem Fall können auch verdünnte Wasserglaslösungen mit entsprechenden Silangehalten eingesetzt werden.

Das erfindungsgemäße Verfahren eignet sich sowohl für Schadensfälle, die durch spezifisch leichte, nichtwäßrige Flüssigkeiten, z. B. Mineral- oder Teeröle, deren Destillationsprodukte und Rückstände oder durch Sickerwässer aus oberflächlichen Ablagerungen einschließlich Deponien verursacht werden, als auch für Schadensfälle durch spezifisch schwere oder wasserlösliche Schadstoffe, die z. B. durch die Sohle eines oberen Grundwasserleiters in sekundäre Grundwasserleiter oder -speicher eindringen können. In dem zuletzt genannten Fall wird die Injektionssohle auf der Sohle des oberen Grundwasserleiters aufliegend hergestellt.

Aus den Ergebnissen der nachfolgend beschriebenen Durchlässigkeitsprüfungen geht hervor, daß durch Injektion von Alkalimetallsilicate (Wasserglas) und Trialkoxysilane enthaltenden Mittel sowohl eine Abdichtung gegenüber Wasser als auch eine Resistenz gegenüber Schadstoffen erzielt wird, während durch Injektion bekannter Abdichtungsmittel. aber jeweils nur eine dieser beiden Forderungen erfüllt wird.

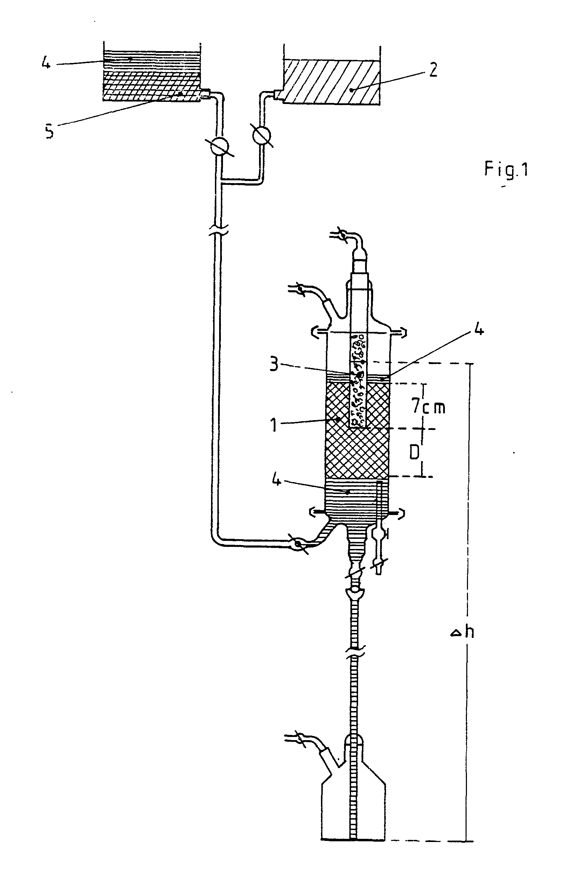

Zur Durchführung der Prüfungen wurde ein den Praxisverhältnissen angepaßtes Laborgerät nach Fig. 1 verwendet : In die Sandfüllung (1) wurden die Injektionsmittel (2) und Wasser (4) von unten her unter schwachem Druck eingepreßt ; die Bentonitsuspension wird gemeinsam mit dem Sand (3) von oben eingefüllt. Nach 24 stündigem Verfestigen der Gele bzw. Quellen des Bentonits, wurde der abgedichtete Sand durch ein etwa in der Mitte des Geräts endendes Rohr mit dem Schadstoff (3) oder Wasser (4), das über eine Sandschicht 5 gefiltert wurde, belastet. Die Belastung erfolgte unter einem hydraulischen Gradienten I = ca. 16, der nicht durch eine drückende, sondern durch eine saugende Wassersäule erzeugt wurde, um auch spezifisch leichte, auf Wasser schwimmende Schadstoffe in der gleichen Apparatur prüfen zu können.

Die Versuchsanordnung entsprach dem Fall, daß der Schadsotff bereits in die Oberfläche der Injektionssohle eingedrungen ist.

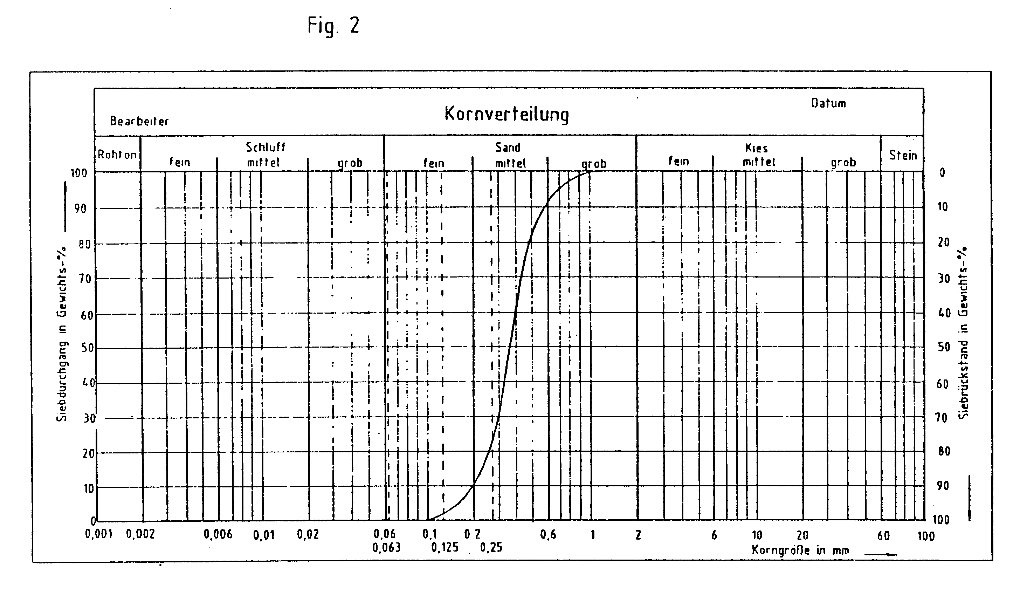

Alle Versuche wurden mit dem gleichen Mittelsand, Kornverteilung wie in Figur 2, angegeben, und unter Anwendung annähernd gleicher hydraulischer Gradienten (I = 16 ± 0,5) durchgeführt, um vergleichbare Meßergebnisse zu erhalten. Gemessen wurde das Absinken des Flüssigkeitsniveaus im Schadstoffrohr, das der abgelaufenen Menge entspricht.

Der in den Beispielen angegebene Durchlässigkeitskoeffizient k wurde nach dem vereinfachten DARCYschen Gesetzt k = Q/(F.I) cm/s berechnet. Darin bedeuten

Q = Durchflußmenge in $cm^3/s$

F = Filterfläche in $cm^2$

I = hydraulischer Gradient $\Delta h/D$

$\Delta h$ = Höhe der Wassersäule in cm = 124 bis 132 cm

D = Dicke der durchflossenen Schicht in cm = 8 cm.

Δh und D gehen aus Fig. 1 hervor. Da der durchflossene Querschnitt des abgedichteten Sandes vom Eintritt bis zum Austritt der Flüssigkeit zunimmt, wurde mit der mittleren Filterfläche F = 33,2 cm² gerechnet.

## Beispiel 1

Die Meßapparatur wurde entsprechend Fig. 1 mit Sand (1) gefüllt, in den von unten her eine Injektionslösung (2) gedrückt wurde, die durch Vermischen von 300 ml Natronwasserglaslösung 37/40° Bé, 1 600 ml Wasser und 100 ml (93 g) n-Propyltrimethoxysilan und 15 Minuten Rühren hergestellt worden war. Nach dem Erstarren der Lösung wurde das Gel aus dem unteren Viertel der Apparatur entfernt und durch Wasser ersetzt. Nach 24 Stunden wurde das Schadstoffrohr mit Wasser oder dem betreffenden Schadstoff gefüllt und deren Abnahme über einen Zeitraum von ca. 5 bis 8 Wochen täglich verfolgt. Dabei wurde der hydraulische Gradient durch Niveauregulierung konstant gehalten. Die in der folgenden Tabelle angegebenen durchschnittlichen Durchflußmengen und Durchlässigkeitskoeffizienten (k) zeigen die sehr gute Abdichtung gegen Wasser und wäßrige Schadstofflösungen und eine praktisch vollständige Undurchlässigkeit für nichtwäßrige Schadstoffe.

Durchlässigkeit des mit Silan-Silicat-Lösung abgedichteten Sandes :

| Schadstoff | Gradient I | Versuchs- dauer (Tage) | Durchfluß (∅ ml/Tag) | k(cm/s) |
|---|---|---|---|---|
| Wasser | 16 | 55 | 0,57 | $1,25 \cdot 10^{-8}$ |
| Phenol, 8,4 % in Wasser | 16,5 | 33 | 0,39 | $8,5 \cdot 10^{-9}$ |
| 0,1 n-Schwefelsäure | 16,5 | 48 | 0,21 | $4,4 \cdot 10^{-9}$ |
| Dieselöl | 16 | 40 | 0* | 0 |
| Trichlorethylen | 16 | 41 | 0* | 0 |
| Perchlorethylen | 16 | 56 | 0* | 0 |

* nur in den ersten 1 bis 4 Tagen drangen geringe Mengen der Flüssigkeiten oberflächlich in den abgedichteten Sand ein, danach nicht mehr.

## Beispiel 2

Durchführung wie Beispiel 1, aber unter Verwendung einer Injektionslösung (1), die durch Vermischen und 20 minütiges Rühren von 300 ml Natronwasserglaslösung 37/40° Bé, 17 ml Wasser und 60 g (65 ml) Isobutyltrimethoxysilan hergestellt wurde.

Die mit dieser Lösung abgedichtete Sandschicht wurde 76 Tage bei einem hydraulischen Gradienten I = 16 mit Perchlorethylen belastet. Während der ersten 2 Tage drangen 4,3 ml Perchlorethylen in die Sandschicht ein, danach nichts mehr.

## Vergleichsbeispiel I

Unter den gleichen Bedingungen wurden Abdichtungen mit bekannten gebildenden Injektionsmitteln auf Wasserglasbasis durchgeführt und geprüft. Für diese Versuche wurden folgende Injectionslösungen hergestellt :

A) Natriumaluminat-Wasserglas-Gemisch mit 15 Vol% Wasserglas durch Vermischen von 300 ml Natronwasserglaslösung 37/40° Bé mit 1 670 ml Wasser und 30 ml (46,2 g) Natriumaluminatlösung (25 % $Al_2O_3$, 19 % $Na_2O$),

B) Natriumaluminat-Wasserglas-Gemisch mit 20 Vol% Wasserglas durch Vermischen von 400 ml Wasserglaslösung mit 1 565 ml Wasser und 35 ml (54 g) Natriumaluminatlösung,

C) Ester-Wasserglas-Gemisch mit 40 Vol% Wasserglas durch Vermischen von 800 ml Wasserglaslösung mit 1 120 ml Wasser und 80 ml (96 g) eines handelsüblichen Gemischs der Dimethylester der Adipin-, Glutar- und Bernsteinsäure und 15 minütiges Rühren unter Zusatz von 2 g eines anionischen Emulgators (Alkylbenzolsulfonat).

Durchlässigkeiten des mit den bekannten Injektionsmittel abgedichteten Sandes für Wasser und Chlorkohlenwasserstoffe :

| Injektions-mittel | Schadstoff | Gradient I | Versuchs-dauer (Tage) | Durchlfuß (Ø ml/Tag) | k (cm/g) |
|---|---|---|---|---|---|
| A | Wasser | 16 | 43 | 10,2 | $2,2.10^{-7}$ |
| | Perchlor-ethylen | 16 | 3 | 166,6* | (Durchbruch) |
| B | Wasser | 16 | 61 | 3,4 | $7,4.10^{-8}$ |
| | Perchlor-ethylen | 16,5 | 3 | 163,3* | (Durchbruch) |
| C | Wasser | 16 | 54,4 Std. | 734,9 | $1,6.10^{-5}$ |
| | Trichlor-ethylen | 16 | 63,6 " | 5,5 | $1,2.10^{-7}$ |

* Die Durchflußmengen waren anfangs klein, stiegen aber nach 1 bis 2 Tagen steil bis zum Durchbruch an (> 100 ml/Stunde).

Vergleichsbeispiel II

Zur Prüfung der abdichtenden Wirkung von Bentonit wurde dieser mit dem Sand und einer zur Porenfüllung ausreichenden Wassermenge von oben in das Prüfgefäß gefüllt. Die Injektion einer Bentonitsuspension von unten war in diesem Falle wegen des erforderlichen Druckes nicht möglich. Das Verhältnis der Trockengewichte Bentonit : Sand wurde mit 1 : 10 sehr hoch gewählt, um eine ausreichende Abdichtung gegen Wasser zu erreichen.

Die Messungen, die nach 2 tägigem Quellen des Bentonits durchgeführt wurden, ergaben bei einem Gradienten I = 16 für

Wasser Durchflußmengen von Ø 25,8 ml/Tag, entspr. $k = 5,6 \cdot 10^{-7}$,
Trichlorethylen Durchflußmengen von Ø 356 ml/Tag, entspr. $k = 7,8 \cdot 10^{-6}$.

Während die Durchlässigkeit für Wasser im Verlauf der Prüfung leicht abnahm, stieg sie für Trichlorethylen deutlich an und erreichte bereits nach 85 Stunden einen k-Wert von $1,1 \cdot 10^{-5}$. Die Anforderungen an eine ausreichende und anhaltende Abdichtung wurden damit nicht erfüllt.

**Patentansprüche**

1. Verfahren zur Isolierung grundwassergefährdender Schadstoffe in wasserdurchlässigen Böden durch Einbringen abdichtenden Materials um den gefährdenden Bereich, wobei die den Schadstoffbereich umgebenden, bis in Grundwasser führende Bodenschichten hinabreichenden eingebrachten vertikalen, die Zufuhr von ausströmenden Grundwasser weitgehend unterbindenden Abdichtungen im Grundwasserbereich durch eine horizontale, nach unten abschließende Injektionssohle verbunden werden, dadurch gekennzeichnet, daß eine gegen Wasser und flüssige Schadstoffe abdichtende Injektionssohle durch Injektion eines gebildeten Gemischs auf Alkalimetallsilikatbasis hergestellt wird, das mindestens ein Alkyltrialkoxysilan der allgemeinen Formel R-Si(OR')$_3$, in der R einen Alkylrest mit 1 bis 6 C-Atomen und R' gleiche oder verschiedene Alkylreste mit 1 bis 4 C-Atomen bedeuten, die ggf. durch ein Sauerstoffatom unterbrochen sein können, und/oder Hydrolyseprodukte dieser Silane enthält.

2. Verfahren nach Anspruch 1, dadurch gekennzeichnet, daß die vertikalen Abdichtungen im Grundwasserbereich durch angrenzende vertikale Abdichtungsschleier aus dem die Injektionssohle bildenden Gemisch verstärkt werden.

**Claims**

1. A process for the isolation of ground water-endangering noxious material in water permeable ground by introduction of sealing material around the endangering zone, wherein the ground strata leading right into the ground water and which surround the region with the noxious material are connected by a horizontal injection base sealing from below to vertically descending seals emplaced in the ground water region blocking off substantially the supply of ground water flowing out, characterised in that injection sealing off against water and liquid noxious material is produced by injection of a mixture which is formed based on alkali metal silicate, which contains at least one alkyltrialkoxy silane of the general formula R-Si(OR')$_3$, in which R denotes an alkyl residue with 1 to 6 C-atoms and R' the same or different alkyl residues with 1 to 4 C-atoms, which optionally can be interrupted by an oxygen atom, and/or hydrolysis products of this silane.

2. Process according to claim 1, characterised in that the vertical seals in the ground water region are strengthened by bounding vertical sealing screens formed from the mixture forming the injection base.

**Revendications**

1. Procédé pour isoler des matières nocives, constituant une menace pour l'eau souterraine, dans des sols perméables à l'eau, par introduction d'une matière d'étanchement autour de la zone menacée, les étanchements verticaux introduits et pénétrant jusqu'aux couches de sols conduisant l'eau souterraine et entourant la zone comportant la ou les matières nocives et empêchant dans une large mesure l'arrivée d'une eau souterraine pouvant sortir de cette zone étant reliés, dans la zone contenant de l'eau souterraine, par une semelle horizontale d'injection assurant un isolement vers le bas, procédé caractérisé en ce qu'on produit une semelle d'injection assurant un étanchement à l'égard de l'eau et des matières liquides nocives, par injection d'un mélange à base de silicates de métaux alcalins et qui contient au moins un alkyltrialcoxysilane de formule générale R-Si(OR')$_3$, dans lequel R représente un reste alkyle ayant 1 à 6 atomes de carbone et R' représente des restes alkyles, identiques ou différents, comportant 1 à 4 atomes de carbone, pouvant éventuellement être interrompus par un atome d'oxygène, et/ou des produits d'hydrolyse de ces silanes.

2. Procédé selon la revendication 1, caractérisé en ce que les étanchements verticaux sont renforcés, dans la zone contenant de l'eau souterraine, par des étanchements verticaux adjacents obtenus à l'aide du mélange formateur d'une semelle d'injection.

Fig.1

Fig. 2

## Kornverteilung

Bearbeiter

Datum

| Rohton | Schluff | | | Sand | | | Kies | | | Stein |
|---|---|---|---|---|---|---|---|---|---|---|
| | fein | mittel | grob | fein | mittel | grob | fein | mittel | grob | |

Siebdurchgang in Gewichts-%

100
90
80
70
60
50
40
30
20
10
0

Siebrückstand in Gewichts-%

0
10
20
30
40
50
60
70
80
90
100

0,001  0,002   0,006  0,01  0,02   0,06   0,1   0 2   0,6   1   2   6   10  20   60  100
0,063   0,125  0,25

Korngröße in mm